# EUROPÄISCHE PATENTSCHRIFT

(11) **EP 0 759 504 B1**
(45) Veröffentlichungstag und Bekanntmachung des Hinweises auf die Patenterteilung: **12.04.2000**
(21) Anmeldenummer: 96112602.6
(22) Anmeldetag: 05.08.1996
(51) Int. Cl.: F02N 11/08

(54) **Selbstfahrendes Fahrzeug**
Self-propelled vehicle
Véhicule automoteur

(30) Priorität: 18.08.1995 US 516887
(43) Veröffentlichungstag der Anmeldung: 26.02.1997
(73) Patentinhaber: DEERE & COMPANY, Moline, Illinois 61265-8098 (US)
(72) Erfinder: Eavenson, Jimmy Nelson, Sr., Juneau, Wisonsin 53039 (US); Hough, Barry Michael, Beaver Dam, Wisconsin 53916 (US)
(74) Vertreter: Feldmann, Bernhard

(56) Entgegenhaltungen:
- DE-A- 3 227 888
- DE-A- 3 707 098
- DE-A- 4 200 542

## Beschreibung

Die Erfindung bezieht sich auf ein selbstfahrendes Fahrzeug mit mindestens einem ersten und einem zweiten Betätigungsorgan, einem einen Zündschalter aufweisenden Steuerstromkreis und mit einem Verbrennungsmotor, wobei der Steuerstromkreis und das erste Betätigungsorgan derart verknüpft sind, daß der Verbrennungsmotor sich bei sich in Betriebsstellung befindlichem Zündschalter automatisch abschaltet, wenn das erste Betätigungsorgan in eine erste Stellung verstellt wurde, und wieder angelassen werden kann, wenn das erste Betätigungsorgan aus der ersten Stellung verstellt wurde.

Bei derartigen Fahrzeugen handelt es sich in der Regel um solche, die auf Golfplätzen eingesetzt werden, also um Fahrzeuge, die eine kurze Strecke gefahren und dann angehalten werden. Ist der Golfball geschlagen oder bei Arbeitsfahrzeugen die Arbeit verrichtet, so wird das Fahrzeug zum nächsten Einsatzort weiterbewegt. Bei dem gattungsmäßig berücksichtigten Fahrzeug handelt es sich um ein "Golfcar" (Prospekt der Club Car, Inc. Augusta, Georgia, VStvA mit dem Druckvermerk 3448-8-86) mit einem Schaltgetriebe, das eine Neutralstellung einnehmen kann. Das erste Betätigungsorgan ist der Schalthebel dieses Golfcars, der sich in seiner ersten Stellung in der Neutralstellung befindet. In der Neutralstellung des Schaltgetriebes kann der Verbrennungsmotor nicht mehr laufen, d. h. bei stillstehendem Fahrzeug soll nicht zuletzt aus Gründen der Umweltbelastung der Motor ausgehen. Der Motor kann aber auch in der Neutralstellung des Getriebes nicht angelassen werden. Wird in einer Schaltstellung des Getriebes für Vorwärts- oder für Rückwärtsfahrt der Motor angelassen und danach das Getriebe in seine Neutralstellung verstellt, so wird der Motor automatisch abgestellt. Mit diesen Maßnahmen will man zusätzlich erreichen, daß die Lebensdauer des Motors verlängert und das Triebwerk keinen übergroßen Belastungen ausgesetzt wird, weil derartige Fahrzeuge durch willkürliches Einsetzen des Getriebes als Bremse unsachgemäß betrieben werden.

Damit stellen sich aber derartige Fahrzeuge im Stillstand automatisch ab, was sinnvoll erscheint, wenn das Fahrzeug nur für den Transport von Golfspielern und deren Hilfspersonal auf dem Golfplatz selbst eingesetzt wird. Solche Fahrzeuge sollten aber auch als Arbeitsfahrzeuge eingesetzt werden können, indem sie im Stillstand Fremdaggregate, wie Heckenscheren, Spritzen usw. antreiben können, weshalb die der Erfindung zugrunde liegende Aufgabe zunächst darin gesehen wird, das bekannte Fahrzeug derart weiter zu bilden, daß bei Stillstand des Fahrzeugs der Verbrennungsmotor weiter betrieben werden kann. Hierzu sieht die Erfindung vor, daß das zweite Betätigungsorgan als eine feststellbare Bremse ausgebildet ist, die wenigstens zwischen einer ersten umbetätigten und einer zweiten betätigten Stellung verstellbar ist, und daß der Steuerstromkreis mit dem zweiten Betätigungsorgan derart verknüpft ist, daß der Verbrennungsmotor bei sich in seiner ersten Stellung befindlichem ersten Betätigungsorgan und sich in Betriebsstellung befindlichem Zündschalter angelassen werden kann, wenn das zweite Betätigungsorgan aus seiner ersten Stellung in seine zweite Stellung verstellt wurde. Auf diese Weise kann, wenn mit derartigen Fahrzeugen in deren Stillstand Fremdaggregate betrieben oder Spielflächen, Plätze usw. ausgeleuchtet werden sollen, der Motor auch bei stillstehendem Fahrzeug weiter betrieben werden mit der Folge, daß sich die Batterie nicht vorzeitig entleert.

Als das Abstellen oder das Wiederanspringen des Verbrennungsmotors beeinflussende Betätigungsorgane bieten sich im Fahrzeug sowieso vorhandene Hebel, Pedale, Schaltknöpfe, Kontrollorgane usw. an. Bevorzugt wird jedoch nach der Erfindung, daß das erste Betätigungsorgan als Gaspedal ausgebildet ist. Auf diese Weise kann bei sich in seiner Betriebsstellung befindlichem Zündschalter der Motor angelassen und gefahren werden, wenn das Gaspedal betätigt wird. Bei einem Loslassen des Gaspedals stellt sich der Motor automatisch ab, wenn das Gaspedal sich in seine Ausgangsstellung zurückgestellt hat. Durch diese Maßnahme wird die Umwelt geschont und ein ungewolltes Weiterlaufen des Motors im Leerlauf ist nicht möglich. Wird mit dem Fahrzeug im Stillstand gearbeitet, so soll aus Sicherheitsgründen die Hand- oder Feststellbremse angezogen sein. Durch ein Anziehen dieser Bremse kann damit der Motor wieder angelassen werden, wobei er sich bei dem Lösen der Bremse wieder ausstellt.

Dem Dokument DE-A-4 200 542 ist ebenfalls ein Betätigungsorgan zu entnehmen, das bei einem Heruntertreten eines Gaspedals einen ersten Stromkreis schließt. Bei geschlossenem ersten Stromkreis und einem auf Stau eingestellten Ausschalter wird ein Relaisschalter geschlossen, der eine stromführende Verbindung zu dem Steuerstromkreis mit Zündschalter herstellt. Auf diese Weise kann bei einem im Stau stehenden Fahrzeug durch Loslassen des Gaspedals der Verbrennungsmotor abgestellt werden. Bei einem erneuten Heruntertreten des Gaspedals soll der Verbrennungsmotor wieder anspringen. Wird der Ausschalter auf Dauerfahrt geschaltet, so wird der über das Gaspedal aktivierbare Relaisschalter überbrückt.

Andererseits ist es im Rahmen der Erfindung auch möglich, daß der Steuerstromkreis derart ausgebildet ist, daß der Verbrennungsmotor bei sich in seiner zweiten Stellung befindlichem zweiten Betätigungsorgan automatisch abgeschaltet wird, wenn das erste Betätigungsorgan kurzzeitig aus seiner ersten Stellung verstellt wird, was beispielsweise nach Beendigung des Arbeitseinsatzes durch ein leichtes Antippen des Gaspedals erfolgen kann. Zweckmäßig kann der Verbrennungsmotor bei sich in einer Betriebsstellung befindlichem Zündschalter automatisch anspringen, wenn das erste Betätigungsorgan aus seiner ersten Stellung verstellt wird. Befindet sich dagegen der Zündschalter in seiner AUS-Stellung, dann ist natürlich ein Anspringen des Motors ausgeschlossen, auch wenn das Gaspedal betätigt oder wenn die Bremse angezogen wird.

Nach einem weiteren Aspekt der Erfindung ist es nicht erforderlich, daß dem ersten und dem zweiten Betätigungsorgan eigene oder voneinander unabhängige Stromkreise zugeordnet werden. Vielmehr wird nach der Erfindung vorgeschlagen, daß der Steuerstromkreis einen Start- und Zündkreis, einen Zündkreis und einen Verriegelungskreis aufweist, wobei der Zündkreis mit dem Verriegelungskreis derart verknüpft ist, daß der Verbrennungsmotor automatisch abgestellt wird, wenn sich das erste und das zweite Betätigungsorgan jeweils in seiner ersten Stellung bei sich in Betriebsstellung befindlichem Zündschalter befindet. Damit ist ein zusätzliches System zum Starten und Betreiben des Motors nicht erforderlich, wenn das Fahrzeug stillsteht und der Motor zum Aufladen der Batterie, zum Ausleuchten von Anlagen oder zum Antreiben von Fremdaggregaten weiterlaufen soll. Hierbei ist der Steuerstromkreis derart verdrahtet, daß ein automatisches sich Abstellen des Verbrennungsmotors verhindert wird, wenn sich das erste Betätigungsorgan in seiner ersten Stellung und das zweite Betätigungsorgan in seiner zweiten Stellung befindet. Zusätzlich ist aber die Verdrahtung des Steuerstromkreises derart gestaltet, daß sich der Verbrennungsmotor bei sich in seiner zweiten Stellung befindlichem zweiten Betätigungsorgan automatisch abstellt, wenn das erste Betätigungsorgan kurzfristig aus seiner ersten Stellung verstellt wurde.

Um den zusätzlichen Funktionen gerecht zu werden, ist der Zündschalter derart ausgebildet, daß er außer seiner AUS-Stellung und Betriebsstellung eine Betriebsstellung bei Fahrzeugstillstand aufweist.

Zum Betreiben der Zündanlage ist in der Regel ein Hauptrelais in seinem erregten Zustand zu halten, weshalb die Erfindung hierzu vorsieht, daß der Steuerstromkreis mit einem Hauptrelais versehen ist und daß dem ersten und dem zweiten Betätigungsorgan jeweils ein erster bzw. ein zweiter Schalter zugeordnet ist, deren Ausgänge mit der Spule des Hauptrelais verbunden sind. Bei geschlossenen und stromführenden ersten oder zweiten Schalter wird damit die Spule des Hauptrelais erregt.

Was die Verkabelung im einzelnen anbelangt, so sollte der Zündschalter in seiner Betriebsstellung und in seiner Betriebsstellung bei Fahrzeugstillstand mit einer Stromquelle und mit den Eingängen der dem ersten und dem zweiten Betätigungsorgan zugeordneten Schaltern verbunden sein, deren Ausgänge an den Verriegelungskreis angeschlossen sind, der ein erstes und ein zweites Relais aufweist, wobei der Zündkreis bei sich in seiner Betriebsstellung oder in seiner Betriebsstellung für Fahrzeugstillstand befindlichem Zündschalter und bei sich in ihren ersten Stellungen befindlichen ersten und zweiten Betätigungsorganen über das erste und das zweite Relais geerdet ist, was bedeutet, daß der Verbrennungsmotor in einer solchen Bedingung sich abgestellt hat bzw. nicht laufen kann. Schließlich ist noch vorgesehen, daß der Ausgang des dem zweiten Betätigungsorgan zugeordneten Schalters mit der Eingangsleitung des ersten Relais verbunden ist, der Ausgang des ersten Relais in der Betriebsstellung für Fahrzeugstillstand des Zündschalters geerdet ist und mit einem von zwei Eingangskontakten des Relaisschalters des ersten Relais verbunden ist, der Ausgang des Relaisschalters des ersten Relais mit dem einen von zwei Eingangskontakten des Relaisschalters des zweiten Relais verbunden ist, der Eingang des zweiten Relais mit dem Ausgang des dem ersten Betätigungsorgan zugeordneten Schalters verbunden ist, der Ausgang des zweiten Relais und der Ausgang des Relaisschalters des zweiten Relais geerdet sind, der andere Eingangskontakt des Relaisschalters des ersten Relais mit dem Zündkreis verbunden ist, bei erregtem ersten Relais der zugehörige Relaisschalter mit dem mit dem Ausgang der ersten Relais verbundenen Eingangskontakt des Relaisschalters des ersten Relais verbunden ist und daß bei erregtem zweiten Relais der Relaisschalter des zweiten Relais eine Stellung einnimmt, in der die Verbindung des Ausgangs des Relaisschalters des ersten Relais mit dem Ausgang des Relaisschalters des zweiten Relais unterbrochen ist. Auf diese Weise wird bei sich in einer seiner Betriebstellungen befindlichem Zündschalter der Verbrennungsmotor in Abhängigkeit von den Stellungen der beiden Betätigungsorgane angelassen und automatisch abgestellt.

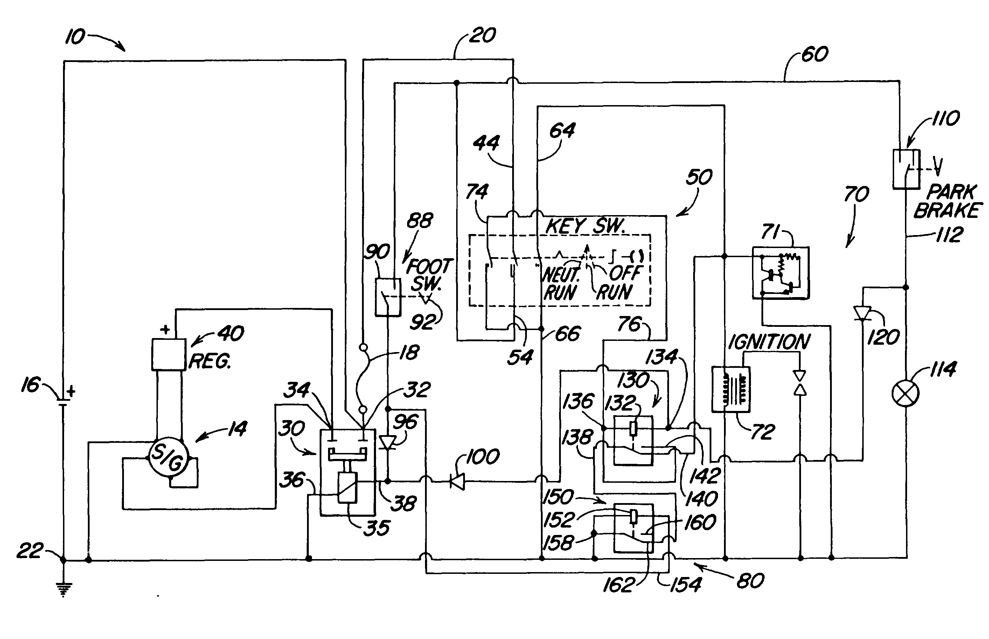

Ein Ausführungsbeispiel der Erfindung ist in Form eines schematischen Steuerstromkreises aus der einzigen Figur ersichtlich.

Diese zeigt einen Steuerstromkreis mit einem Zünd- und Starterkreis 10 für ein nicht dargestelltes Fahrzeug, das beispielsweise auf Golfplätze oder in Hallen eingesetzt wird und in der Regel so gefahren wird, daß es nach einer relativen kurzen Einsatzphase verlassen wird, um beispielsweise einen Golfball zu spielen, um etwas abzuladen oder um eine andere Arbeit zu verrichten, wonach es zum nächsten Einsatzort weitergefahren wird. Derartige Fahrzeuge können sich im Stillstand automatisch abstellen.

Der Zünd- und Starterkreis 10 eines solchen Fahrzeugs weist einen Anlasser und einen Generator 14 (S/G) auf, die bei dem bevorzugten Ausführungsbeispiel kombiniert sein können und mit einem herkömmlichen Verbrennungsmotor verbunden sind. Eine Stromquelle in Form einer Batterie 16 hat eine positive Klemme, an die über ein Schmelzglied 18 eine positive Sicherungsleitung 20 angeschlossen ist, und eine negative Klemme mit einer Erdungsleitung 22.

Ein Hauptrelais 30 weist Schaltklemmen 32 und 34, die mit der positiven Klemme der Batterie 16 und mit der Anlasser-Generator-Einheit 14 (S/G) verbunden sind, und eine dauerbetriebene Spule 35 auf, die über eine erste Leitung 36 an die Erdungsleitung 22 angeschlossen ist und zu der eine zweite oder Steuerleitung 38 führt. Wenn die Steuerleitung 38 stromführend ist, wird das Relais 30 aktiviert, und der Stromkreis zwischen der Batterie 16 und der Anlasser-Generator-Einheit 14 wird geschlossen. Ein Spannungsregler 40 (REG.) ist noch zwischen die Schaltklemme 34 und die Anlasser-Generator-Einheit 14 geschaltet, um nach dem Anlassen des Motors ein reguliertes Laden der Batterie 16 zu ermöglichen.

Die Sicherungsleitung 20 ist mit ihrem anderen Ende an die eine Eingangsklemme 44 eines Zündschalters 50 (KEY SW.) angeschlossen. Der Zündschalter 50 seinerseits ist als schlüsselbetätigbarer Dreistellungsschalter mit drei Klemmen ausgebildet, der eine AUS-Stellung (OFF), eine Betriebs- oder Laufstellung (RUN) und eine Betriebsstellung bei Fahrzeugstillstand (NEUT.RUN) einnehmen kann. In der Betriebs- oder Laufstellung (RUN) und in der Betriebsstellung bei Fahrzeugstillstand (NEUT.RUN) ist die Eingangsklemme 44 über eine Leitung 54 an eine Spannungsleitung 60 angeschlossen, die damit in diesen beiden Stellungen des Zündschalters 50 mit der positiven Klemme der Batterie 16 verbunden ist.

Der Zündschalter 50 ist mit einer zweiten Eingangsklemme 64 versehen, die in der ersten oder in der in der einzigen Figur dargestellten AUS-Stellung (OFF) des Zündschalters 50 über eine Leitung 66 geerdet und ansonsten offen ist. Andererseits ist an die zweite Eingangsklemme 64 der Zündkreis 70 des Verbrennungsmotors angeschlossen, dessen Zündmodul mit 71 und dessen Magnetzündung mit 72 bezeichnet sind. Befindet sich der Zündschalter 50 in seiner AUS-Stellung (OFF), dann ist der Zündkreis 70 an die Leitung 66 angeschlossen und somit geerdet. In einem solchen Fall wird die Zündung sofort unterbrochen mit der Folge, daß der Verbrennungsmotor sich ausstellt.

Der Zündschalter 50 ist ferner noch mit einer dritten Eingangsklemme 74 versehen, die über eine Leitung 76 mit einem Verriegelungsnetz 80 verbunden ist. Die Eingangsklemme 74 ist in der dritten oder Betriebsstellung bei Fahrzeugstillstand (NEUT.RUN) über die Leitung 66 geerdet und ansonsten offen. Im übrigen steht der Zündschalter unter Federwirkung, um in seine zweite oder Betriebs- oder Laufstellung (RUN) zurückkehren zu können, wenn er aus seiner dritten Stellung freigegeben wird.

Die Steuerleitung 38 des Hauptrelais 30 ist noch an einen Kreis 88 angeschlossen, der bei dem bevorzugten Ausführungsbeispiel per Fuß aktiviert werden kann. Im einzelnen ist hierzu ein erster Schalter 90 vorgesehen, der über ein in den Ansprüchen als erstes Betätigungsorgan bezeichnetes Gaspedal 92 (FOOT SW.) betätigt werden kann und nur dann offen ist, wenn das Gaspedal nicht betätigt ist bzw. sich in seiner Ausgangsstellung oder in seiner ersten Stellung befindet. Um nun den Motor anlassen zu können, stellt eine Bedienungsperson den Zündschalter 50 in seine Betriebs- oder Laufstellung (RUN), sofern er sich nicht bereits in dieser befindet, und tritt das Gaspedal 92 herunter, woraufhin der Schalter 90 schließt. Ist der Schalter 90 geschlossen, so entsteht ein geschlossener Stromkreis von der Spannungsleitung 60 zu der Steuerleitung 38 über eine Sperrdiode 96, um das Hauptrelais 30 zum Motoranlassen zu erregen. Der Motor selbst läuft aber nur solange, wie das Gaspedal 92 betätigt wird, es sei denn, die Stromzufuhr zu der Spule 35 des Hauptrelais 30 bzw. zu der Steuerleitung 38 erfolgt über einen weiteren Weg, und zwar über das Verriegelungsnetz 80, was nachfolgend noch zu beschreiben ist. Erfolgt die Stromzufuhr dagegen nicht über den noch zu beschreibenden alternativen Weg, dann stellt sich der Motor ab, sobald das Hauptrelais 30 bei einem Freigeben des Gaspedals 92 deaktiviert wird.

Um aber den Motor bei einem nicht betätigten Gaspedal oder offenen Schalter 90 in einem Betriebszustand halten zu können, was in Einzelfällen zweckmäßig erscheint, ist die Steuerleitung 38 des Hauptrelais 30 zusätzlich mit dem Verriegelungsnetz 80 verdrahtet. In einer entsprechenden Verbindungsleitung ist hierzu eine zweite Sperrdiode 100 vorgesehen, während die Spannungsleitung 60 an einen zweiten Schalter 110 angeschlossen ist, der bei dem bevorzugten Ausführungsbeispiel durch ein Anziehen einer in den Ansprüchen als zweites Betätigungsorgan bezeichneten Park- oder Feststellbremse (PARK BRAKE) geschlossen wird und ausgangsseitig an eine Leitung 112 angeschlossen ist. Befindet sich die Park- oder Feststellbremse in ihrer ersten Stellung, in der sie nicht betätigt ist, so ist der Schalter 110 offen. Der Schalter 110 wird geschlossen, wenn die Park- oder Feststellbremse (PARK BRAKE) angezogen oder in ihre zweite Stellung verstellt wurde. In einem solchen Fall wird die Leitung 112 stromführend, wenn sich der Zündschalter 50 in seiner Lauf- oder Betriebsstellung (RUN) oder in einer Betriebsstellung bei Fahrzeugstillstand (NEUT.RUN) befindet. Ein Abzweig der Leitung 112 ist noch an die Erdungsleitung 22 angeschlossen und in diesem Abzweig ist noch eine Anzeigelampe 114 vorgesehen, um der Bedienungsperson eine visuelle Anzeige zu geben, wenn die Park- oder Feststellbremse betätigt ist. Ein weiterer Abzweig der Leitung 112 ist mit einer dritten Diode 120 versehen und führt zu dem Verriegelungsnetz 80, wodurch zwischen den Dioden 100 und 120 unter vorherbestimmbaren Bedingungen eine stromführende Verbindung oder ein alternativer Weg zur Erregung des Hauptrelais 30 entstehen kann.

Das Verriegelungsnetz 80 weist im einzelnen ein erstes Relais 130 auf, dessen Spule 132 eine Eingangsleitung 134, die mit der Diode 120 und der Diode 100 verbunden ist, und eine Ausgangsleitung 136 hat, die mit der dritten Eingangsklemme 74 des Zündschalters 50 in Verbindung steht. Auf diese Weise wird das Relais 130 erregt, wenn die Leitung 112 stromführend ist und wenn sich der Zündschalter 50 in seiner dritten oder in der Betriebsstellung bei Fahrzeugstillstand (NEUT.RUN) befindet. Der Ausgang 138 des Relaisschalters des Relais 130 ist bei nicht erregtem Relais 130 an eine Ausgangsleitung 140 des Zündkreises 70 angeschlossen. Der Schalter befindet sich dann in einer unteren Position. Wird das Relais 130 erregt, dann wird der Schalter in seine obere Position gezogen, in der der Ausgang 138 des Relaisschalters mit einer Ausgangsklemme 142 verbunden ist, die ihrerseits an die Ausgangsleitung 136 angeschlossen ist.

Das Verriegelungsnetz 80 ist ferner mit einem zweiten Relais 150 versehen, das im wesentlichen wie das erste Relais 130 ausgebildet ist. Die Spule des Relais 150 ist mit 152 bezeichnet und an eine Eingangsleitung 154 angeschlossen, die mit dem Ausgang des Schalters 90, der über das Gaspedal 92 betätigbar ist, verbunden ist. Die Ausgangsleitung der Spule 152 ist geerdet bzw. an die Erdungsleitung 22 angeschlossen. Bei geschlossenem Schalter 90 und stromführender Spannungsleitung 60 wird damit das Relais 150 erregt. Eine mit dem Relaisschalter des Relais 150 verbundene Klemme 158 ist geerdet. Über den Relaisschalter wird diese Klemme 158 mit einem offenen Ausgang 160 verbunden, wenn das Relais 150 erregt bzw. der Relaisschalter in seine obere Position verstellt wird. Wenn das Relais 150 nicht erregt ist, befindet sich der Relaisschalter des Relais 150 in seiner unteren in der Zeichnung gezeigten Stellung. In dieser Stellung ist die Klemme 158 mit einer Eingangsklemme 162 des Relaisschalters des Relais 150 verbunden, die ihrerseits an den Ausgang 138 des Relaisschalters des Relais 130 angeschlossen ist. Sind beide Relais 130 und 150 in einem unerregten Zustand, wie er in der Zeichnung dargestellt ist, dann ist der Zündkreis 70 über die Ausgangsleitung 140, den Ausgang 138, die Eingangsklemme 162 und die Klemme 158 geerdet. In einem solchen Zustand stellt sich der Motor selbst ab. Das Relais 130 wird aktiviert, wenn der Zündschalter 50 in seine dritte oder Betriebsstellung bei Fahrzeugstillstand (NEUT.RUN) verstellt und wenn der Schalter 110 der Parkbremse geschlossen wurde. In dieser Stellung des Zündschalters 50 ist die Spannungsleitung 60 mit der ersten Eingangsklemme 44 des Zündschalters 50 verbunden, so daß die Leitung 112 bei geschlossenem Schalter 110 stromführend ist. Über die Diode 120, die Spule 132 des Relais 130, die Leitung 76, die dritte Eingangsklemme 74 und die Leitung 66 erfolgt dann der Stromverlauf. Ist das Relais 130 einmal erregt, dann kann es in dieser Stellung gehalten werden, d. h. es entsteht eine Halteschleife, sobald das Relais 150 deaktiviert ist, was sofort erfolgt, sobald die Bedienungsperson durch Loslassen des Gaspedals 92 den Schalter 90 öffnet. Auf diese Weise wird verhindert, daß der Zündkreis 70 durch die Relais 130 und 150 geerdet wird, was ein selbsttätiges Abstellen des Motors zur Folge haben würde. Andererseits bedeutet ein Lösen der Parkbremse bzw. ein Öffnen des Schalters 110 oder ein Verstellen des Zündschalters 50 in seine AUS-Stellung ein sofortiges Abstellen des Motors.

Um das Fahrzeug anlassen zu können, verstellt eine sich auf dem Fahrzeug befindliche Bedienungsperson den Zündschalter 50 aus seiner AUS-Stellung in seine zweite oder Lauf- oder Betriebsstellung (RUN). Danach braucht sie lediglich nur noch das Gaspedal 92 herunter zu treten, woraufhin der Verbrennungsmotor sofort anspringt, da durch Schließen des Schalters 90 das Hauptrelais 30 erregt wird. Andererseits kann der Verbrennungsmotor auch dadurch gestartet werden, daß der Zündschalter 50 in seine dritte oder Betriebsstellung bei Fahrzeugstillstand (NEUT.RUN) verstellt wird. Bei einem heruntergetretenen Gaspedal 92 werden der Schalter 90 und die Diode 96 stromführend und das Hauptrelais 30 wird bzw. bleibt erregt. Über die Eingangsleitung 154 wird gleichzeitig das Relais 150 aktiviert und sein Relaisschalter verstellt sich in seine obere Position, so daß eine Erdung des Zündkreises 70 vermieden wird. Der Motor kann auch angelassen werden, wenn sich der Zündschalter 50 in seiner dritten oder seiner Betriebsstellung bei Fahrzeugstillstand (NEUT.RUN) befindet und wenn die Parkbremse angezogen wird, wodurch der Schalter 110 geschlossen wird. Bei einem Lösen der Parkbremse bzw. bei einem Öffnen des Schalters 110 wird der Zündkreis 70 geerdet und der Motor wird sich sofort abstellen, es sei denn, der Schalter 90 wird durch Betätigung des Gaspedals geschlossen, wodurch das Relais 150 wieder erregt wird.

Möchte die Bedienungsperson das Fahrzeug im Dauerbetrieb aber im Stillstand betreiben, um beispielsweise zu verhindern, daß sich bei einem Betrieb von elektrischen Komponenten oder von elektrisch vom Fahrzeug aus betriebenen Geräten die Batterie entlädt, so braucht sie lediglich den Zündschalter 50 in seine dritte Stellung zu verstellen und durch Betätigung der Feststellbremse den Schalter 110 zu schließen, woraufhin über die Leitung 112, die Diode 120, die Eingangsleitung 134 und die Diode 100 das Hauptrelais 30 erregt wird. Bei einer Verstellung des Zündschalters 50 in seine linke oder dritte Stellung bzw. in die Betriebsstellung bei Fahzeugstillstand (NEU.RUN) wird die Leitung 76 geerdet und das Relais 130 aktiviert. Der Relaisschalter des ersten Relais 130 verstellt sich in seine obere Position und es entsteht eine Halteschleife, die das erste Relais 130 in seinem aktivierten Zustand hält und auch dann bestehen bleibt, wenn der Zündschalter 50 in seine mittlere Lauf- oder Betriebsstellung (RUN) zurückspringt. Bleibt das Gaspedal 92 unbetätigt und damit der Schalter 90 offen, so ist das zweite Relais 150 in einem unerregten Zustand, und der Ausgang 138 und die Ausgangsleitung 142 sind über die Klemme 158 und die Eingangsklemme 162 geerdet. In einem solchen Zustand läuft der Motor, ohne daß das Gaspedal in einer Betriebsstellung gehalten werden müßte. Die Zündung des Motors wird jedoch in diesem Zustand sofort unterbrochen, sobald der Schalter 110 geöffnet oder der Zündschalter 50 in seine AUS-Stellung verstellt wird. Andererseits kann sich der Motor auch ausstellen, wenn in der Lauf- oder Betriebsstellung (RUN) des Zündschalters 50 das Gaspedal bei geschlossenem Schalter 110 kurzzeitig betätigt wird.

Selbstverständlich müssen die Schalter 90 und 110 nicht in Abhängigkeit von der Bewegung eines Gaspedals oder einer Feststellbremse betätigt werden. Gaspedal und Feststellbremse bieten sich jedoch bei dem bevorzugten Ausführungsbeispiel an, können jedoch durch eine Fußbremse, Handhebel usw. ersetzt werden.

Bei dem bevorzugten Ausführungsbeispiel ist das Fahrzeug in der Regel nicht mit einem Schaltgetriebe ausgestattet. Riemen- oder Kettenantriebe werden bevorzugt, weil bei diesen bei einem Abschalten der Zündung bzw. bei einem Abschalten des Motors die Übertragung zu den Rädern ohne Zwischenschaltung einer Kupplung unterbrochen wird. Da bei dem Bremsen derartiger Fahrzeuge der Fuß in der Regel von dem Gaspedal entfernt wird, schaltet sich die Zündung bei dem Freigeben des Gaspedals und damit der Motor aus. Durch eine erneute Betätigung des Gaspedals schaltet sich die Zündung wieder ein und der Motor springt wieder an. Bei dem Einsatz des Fahrzeugs als stationäres Antriebsgerät kann die Zündung durch Anziehen der Bremse eingeschaltet und der Motor in Gang gesetzt werden. Bei dem bevorzugten Ausführungsbeispiel läßt sich dann der Motor auch durch kurzzeitiges Antippen des Gaspedals wieder ausschalten, da bei einem erregten zweiten Relais 150 die Halteschleife für das erste Relais 130 im Verriegelungsnetz zusammenbricht.

## Patentansprüche

1. Selbstfahrendes Fahrzeug mit mindestens einem ersten und einem zweiten Betätigungsorgan, einem einen Zündschalter (50) aufweisenden Steuerstromkreis und mit einem Verbrennungsmotor, wobei der Steuerstromkreis und das erste Betätigungsorgan derart verknüpft sind, daß der Verbrennungsmotor sich bei sich in Betriebsstellung befindlichem Zündschalter (50) automatisch abschaltet, wenn das erste Betätigungsorgan in eine erste Stellung verstellt wurde, und wieder angelassen werden kann, wenn das erste Betätigungsorgan aus der ersten Stellung verstellt wurde, dadurch gekennzeichnet, daß das zweite Betätigungsorgan als eine feststellbare Bremse ausgebildet ist, die wenigstens zwischen einer ersten, **unbetätigten** und einer zweiten, **betätigten** Stellung verstellbar ist, und daß der Steuerstromkreis mit dem zweiten Betätigungsorgan derart verknüpft ist, daß der Verbrennungsmotor bei sich in seiner ersten Stellung befindlichem ersten Betätigungsorgan und sich in Betriebsstellung befindlichem Zündschalter (50) angelassen werden kann, wenn das zweite Betätigungsorgan aus seiner ersten Stellung in seine zweite Stellung verstellt wurde.

2. Fahrzeug nach Anspruch 1, dadurch gekennzeichnet, daß das erste Betätigungsorgan als Gaspedal (92) ausgebildet ist.

3. Fahrzeug nach Anspruch 1 oder 2, dadurch gekennzeichnet, daß der Steuerstromkreis derart ausgebildet ist, daß der Verbrennungsmotor bei sich in seiner zweiten Stellung befindlichem zweiten Betätigungsorgan automatisch abgeschaltet wird, wenn das erste Betätigungsorgan kurzzeitig aus seiner ersten Stellung verstellt wird.

4. Fahrzeug nach Anspruch 1 oder 2, dadurch gekennzeichnet, daß der Verbrennungsmotor bei sich in einer Betriebsstellung befindlichem Zündschalter (50) automatisch anspringt, wenn das erste Betätigungsorgan aus seiner ersten Stellung verstellt wird.

5. Fahrzeug nach einem oder mehreren der vorherigen Ansprüche, dadurch gekennzeichnet, daß der Steuerstromkreis einen Start- und Zündkreis (10), einen Zündkreis (70) und einen Verriegelungskreis (80) aufweist, wobei der Zündkreis (70) mit dem Verriegelungskreis (80) derart verknüpft ist, daß der Verbrennungsmotor automatisch abgestellt wird, wenn sich das erste und das zweite Betätigungsorgan jeweils in seiner ersten Stellung bei sich in Betriebsstellung befindlichem Zündschalter (50) befindet.

6. Fahrzeug nach Anspruch 5, dadurch gekennzeichnet, daß der Steuerstromkreis derart verdrahtet ist, daß ein automatisches sich Abstellen des Verbrennungsmotors verhindert wird, wenn sich das erste Betätigungsorgan in seiner ersten Stellung und das zweite Betätigungsorgan in seiner zweiten Stellung befindet.

7. Fahrzeug nach Anspruch 6, dadurch gekennzeichnet, daß die Verdrahtung des Steuerstromkreises derart ist, daß sich der Verbrennungsmotor bei sich in seiner zweiten Stellung befindlichem zweiten Betätigungsorgan automatisch abstellt, wenn das erste Betätigungsorgan kurzfristig aus seiner ersten Stellung verstellt wurde.

8. Fahrzeug nach einem oder mehreren der vorherigen Ansprüche, dadurch gekennzeichnet, daß der Zündschalter (50) außer seiner AUS-Stellung (OFF) und Betriebsstellung (RUN) eine Betriebsstellung bei Fahrzeugstillstand (NEUT.RUN) aufweist.

9. Fahrzeug nach einem oder mehreren der vorherigen Ansprüche, dadurch gekennzeichnet, daß der Steuerstromkreis mit einem Hauptrelais (30) versehen ist und daß dem ersten und dem zweiten Betätigungsorgan jeweils ein erster bzw. ein zweiter Schalter (90 bzw. 110) zugeordnet ist, deren Ausgänge mit der Spule (35) des Hauptrelais verbunden sind.

10. Fahrzeug nach einem oder mehreren der vorherigen Ansprüche, dadurch gekennzeichnet, daß der Zündschalter (50) in seiner Betriebsstellung (RUN) und in seiner Betriebsstellung bei Fahrzeugstillstand (NEUT.RUN) mit einer Stromquelle (16) und mit den Eingängen der dem ersten und dem zweiten Betätigungsorgan zugeordneten Schaltern (90, 110) verbunden ist, deren Ausgänge an den Verriegelungskreis (80) angeschlossen sind, der ein erstes und ein zweites Relais (130, 150) aufweist, wobei der Zündkreis (70) bei sich in seiner Betriebsstellung (RUN) oder in seiner Betriebsstellung für Fahrzeugstillstand (NEUT.RUN) befindlichem Zündschalter (50) und bei sich in ihren ersten Stellungen befindlichen ersten und zweiten Betätigungsorganen über das erste und das zweite Relais (130, 150) geerdet ist.

11. Fahrzeug nach Anspruch 10, dadurch gekennzeichnet, daß
- der Ausgang des dem zweiten Betätigungsorgan zugeordneten Schalters (110) mit der Eingangsleitung (134) des ersten Relais (130) verbunden ist,
- der Ausgang des ersten Relais (130) in der Betriebsstellung für Fahrzeugstillstand (NEUT.RUN) des Zündschalters (50) geerdet ist und mit einem von zwei Eingangskontakten des Relaisschalters des ersten Relais (130) verbunden ist,
- der Ausgang des Relaisschalters des ersten Relais (130) mit dem einen von zwei Eingangskontakten des Relaisschalters des zweiten Relais (150) verbunden ist,
- der Eingang des zweiten Relais (150) mit dem Ausgang des dem ersten Betätigungsorgan zugeordneten Schalters (90) verbunden ist,
- der Ausgang des zweiten Relais (150) und der Ausgang des Relaisschalters des zweiten Relais (150) geerdet sind,
- der andere Eingangskontakt des Relaisschalters des ersten Relais (130) mit dem Zündkreis (70) verbunden ist,
- bei erregtem ersten Relais (130) der zugehörige Relaisschalter Schalter mit dem mit dem Ausgang der ersten Relais verbundenen Eingangskontakt des Relaisschalters des ersten Relais (130) verbunden ist und
- daß bei erregten zweiten Relais (150) der Relaisschalter des zweiten Relais (150) eine Stellung einnimmt, in der die Verbindung des Ausgangs des Relaisschalters des ersten Relais (130) mit dem Ausgang des Relaisschalters des zweiten Relais (150) unterbrochen ist.

## Claims

1. A self-propelled vehicle with at least a first and a second actuating member, a control circuit comprising an ignition switch (50) and an internal combustion engine, wherein the control circuit and the first actuating member are so coupled that the internal combustion engine automatically switches off when the ignition switch (50) is in operating position when the first actuating member is moved into a first position and can be started again when the first actuating member has been moved out of the first position, characterized in that the second actuating member is in the form of a lockable brake which can be moved at least between a first, **un-actuated** position and a second, **actuated** position, and in that the control circuit is so coupled to the second actuating member that the internal combustion engine can be started with the first actuating member in its first position and the ignition switch (50) in operating position, when the second actuating member is moved out of its first position into its second position.

2. A vehicle according to claim 1, characterized in that the first actuating member is in the form of an accelerator pedal (92).

3. A vehicle according to claim 1 or 2, characterized in that the control circuit is so formed that the internal combustion engine is automatically switched off with the second actuating member in its second position when the first actuating member is moved briefly out of its first position.

4. A vehicle according to claim 1 or 2, characterized in that the internal combustion engine fires automatically with the ignition switch (50) in its operating position when the first actuating member is moved out of its first position.

5. A vehicle according to one or more of the preceding claims, characterized in that the control circuit comprises a start and ignition circuit (10), an ignition circuit (70) and a latching circuit (80), wherein the ignition circuit (70) is so coupled to the latching circuit (80) that the internal combustion engine is automatically stopped when the first and second actuating members are each in their first position with the ignition switch (50) in operating position.

6. A vehicle according to claim 5, characterized in that the control circuit is so wired that automatic switching off of the internal combustion engine is prevented when the first actuating member is in its first position and the second actuating member is in its second position.

7. A vehicle according to claim 6, characterized in that the wiring of the control circuit is such that the internal combustion engine turns off automatically with the second actuating member in its second position when the first actuating member is moved briefly out of its first position.

8. A vehicle according to one or more of the preceding claims, characterized in that the ignition switch (50) has in addition to its OFF position (OFF) and operating position (RUN) an operating position with the vehicle stationary (NEUT.RUN).

9. A vehicle according to one or more of the preceding claims, characterized in that the control circuit is provided with a main relay (30) and in that a second and switch (90 and 110 respectively) are associated with the first and second actuating members respectively, with their outputs connected to the coil (35) of the main relay.

10. A vehicle according to one or more of the preceding claims, characterized in that the ignition switch (50) is connected in its operating position (RUN) and in its operating position with the vehicle stationary (NEUT.RUN) to a current source (16) and to the inputs of the switches (90, 110) associated with the first and second actuating members, the outputs of which switches are connected to the latching circuit (80), which comprises a first and a second relay (130, 150), wherein the ignition circuit (70) is earthed via the first and the second relays (130, 150) with the ignition switch (50) in its operating position (RUN) or in its operating position for the vehicle stationary (NEUT.RUN) and with the first and second actuating members in their first positions.

11. A vehicle according to claim 10, characterized in that
- the output of the switch (110) associated with the second actuating member is connected to the input line (134) of the first relay (130),
- the output of the first relay (130) is earthed in the operating position for the vehicle stationary (NEUT.RUN) of the ignition switch (50) and is connected to one of two input contacts of the relay switch of the first relay (130),
- the output of the relay switch of the first relay (130) is connected to the one of two inputs of the relay switch of the second relay (150),
- the input of the second relay (150) is connected to the output of the switch (90) associated with the first actuating member,
- the output of the second relay (150) and the output of the relay switch of the second relay (150) are earthed,
- the other input contact of the relay switch of the first relay (130) is connected to the ignition circuit (70),
- with the first relay (130) excited the associated relay switch is connected to the input contact of the relay switch of the first relay (130) connected to the output of the first relay, and
- in that with the second relay (150) excited, the relay switch of the second relay (150) assumes a position in which the connection of the output of the relay switch of the first relay (130) to the output of the relay switch of the second relay (150) is interrupted.

## Revendications

1. Véhicule autotracté, comportant au moins des premier et second organes d'actionnement, un circuit de commande comportant un contacteur d'allumage (50), et un moteur à combustion interne, le circuit de commande et le premier organe d'actionnement étant combinés de telle sorte que le moteur à combustion interne s'arrête automatiquement lorsque le contacteur d'allumage (50) est situé dans la position de fonctionnement, lorsque le premier organe d'actionnement a été amené dans une première position, et pouvant être à nouveau activé lorsque le premier organe d'actionnement a été dégagé de la première position, caractérisé en ce que le second organe d'actionnement est agencé sous la forme d'un frein pouvant être arrêté, qui peut être déplacé au moins entre une première position non actionnée et une seconde position actionnée, et que le circuit de commande est combiné au second organe d'actionnement de telle sorte que lorsque le second organe d'actionnement est situé dans sa première position et que le contacteur d'allumage (50) est situé dans sa position de fonctionnement, le moteur à combustion interne peut démarrer, lorsque le second organe d'actionnement a été amené de sa première position dans sa seconde position.

2. Véhicule selon la revendication 1, caractérisé en ce que le premier organe d'actionnement est agencé sous la forme d'une pédale d'accélérateur (92).

3. Véhicule selon la revendication 1 ou 2, caractérisé en ce que le circuit de commande est agencé de telle sorte que lorsque le second organe d'actionnement est situé dans sa seconde position, le moteur à combustion interne est débranché automatiquement, lorsque le premier organe d'actionnement est écarté, pendant un bref intervalle de temps, de sa première position.

4. Véhicule selon la revendication 1 ou 2, caractérisé en ce que lorsque le contacteur d'allumage (50) est situé dans une position de fonctionnement, le moteur à combustion interne démarre automatiquement lorsque le premier organe d'actionnement est écarté de sa première position.

5. Véhicule selon une ou plusieurs des revendications précédentes, caractérisé en ce que le circuit de commande comporte un circuit de démarrage et d'allumage (10), un circuit d'allumage (70) et un circuit de verrouillage (80), le circuit d'allumage (70) étant combiné au circuit de verrouillage (80) de telle sorte que le moteur à combustion interne est automatiquement arrêté lorsque les premier et second organes d'actionnement sont situés respectivement dans leur première position lorsque le contacteur d'allumage (50) est situé dans une position de fonctionnement.

6. Véhicule selon la revendication 5, caractérisé en ce que le circuit de commande est câblé de telle sorte qu'un arrêt automatique du moteur à combustion interne est empêché lorsque le premier organe d'actionnement est situé dans une première position et que le second organe d'actionnement est situé dans une seconde position.

7. Véhicule selon la revendication 6, caractérisé en ce que le câblage du circuit de commande est tel que, lorsque le second organe d'actionnement est situé dans sa seconde position, le moteur à combustion interne est arrêté automatiquement, lorsque le premier organe d'actionnement a été écarté, de sa première position pendant un bref intervalle de temps.

8. Véhicule selon une ou plusieurs des revendications précédentes, caractérisé en ce que le contacteur d'allumage (50) comporte, en dehors de sa position ARRET (OFF) et sa position de fonctionnement (RUN), une positon de fonctionnement lorsque le véhicule est à l'arrêt (NEUT.RUN).

9. Véhicule selon une ou plusieurs des revendications précédentes, caractérisé en ce que le circuit de commande est équipé d'un relais principal (30) et qu'aux premier et second organes d'actionnement sont associés respectivement des premier et second interrupteurs (90 et 110), dont les sorties sont reliées à la bobine (35) du relais principal.

10. Véhicule selon une ou plusieurs des revendications précédentes, caractérisé en ce que dans sa position de fonctionnement (RUN) et dans sa position de fonctionnement alors que le véhicule est à l'arrêt (NEUT.RUN), le contacteur d'allumage (50) est relié à une source de courant (16) et aux entrées des interrupteurs (90,110) associés aux premier et second organes d'actionnement, dont les sorties sont raccordées au circuit de verrouillage (80), qui possède un premier et un second relais (130,150), auquel cas, lorsque le contacteur d'allumage (50) est situé dans sa position de fonctionnement (RUN) ou dans sa position de fonctionnement lorsque le véhicule est à l'arrêt (NEUT.RUN) et que les premier et second organes d'actionnement sont situés dans leur première position, le circuit d'allumage (70) est raccordé à la masse par l'intermédiaire des premier et second relais (130,150).

11. Véhicule selon la revendication 10, caractérisé en ce que
- la sortie de l'interrupteur (110) associé au second organe d'actionnement est reliée à la ligne d'entrée (134) du premier relais,
- lorsque le contacteur d'allumage (50) est dans sa position de fonctionnement dans le cas où le véhicule est à l'arrêt (NEUT.RUN), la sortie du premier relais (130) est connectée à la masse et est reliée à l'un de deux contacts d'entrée de l'interrupteur du premier relais (130),
- la sortie de l'interrupteur du premier relais (130) est reliée à l'un de deux contacts d'entrée de l'interrupteur du second relais (150),
- l'entrée du second relais (150) est reliée à la sortie de l'interrupteur (90) associé au premier organe d'actionnement,
- la sortie du second relais (150) et la sortie de l'interrupteur du second relais (150) sont connectées à la masse,
- l'autre contact d'entrée de l'interrupteur du premier relais (130) est relié au circuit d'allumage (70),
- lorsque le premier relais (130) est excité, l'interrupteur associé du relais est relié au contact d'entrée, qui est relié à la sortie du premier relais, de l'interrupteur du premier relais (130), et
- que lorsque le second relais (150) est excité, l'interrupteur du second relais (150) prend une position, dans laquelle la liaison entre la sortie de l'interrupteur du premier relais (130) et la sortie de l'interrupteur du second relais (150) est interrompue.
